# EUROPEAN PATENT APPLICATION

(11) **EP 4 027 409 A1**
(43) Date of publication of application: **13.07.2022**
(21) Application number: 21856179.3
(22) Date of filing: 10.08.2021
(51) Int. Cl.: H01M 4/36, H01M 4/62, H01M 4/38, H01M 10/052, C01B 32/198, H01M 4/02

(54) **CATHODE FOR LITHIUM SECONDARY BATTERY, MANUFACTURING METHOD THEREFOR, AND LITHIUM SECONDARY BATTERY COMPRISING CATHODE**

(30) Priority: 11.08.2020 KR 20200100196
(71) Applicant: LG ENERGY SOLUTION, LTD., Seoul 07335 (KR); Seoul National University R & DB Foundation, Seoul 08826 (KR)
(72) Inventor: KIM, Soohyun, Daejeon 34122 (KR); LEE, Jong-Chan, Seoul 08830 (KR); CHOI, Seokin, Daejeon 34122 (KR); SOHN, Kwonnam, Daejeon 34122 (KR); JEONG, Daun, Seoul 01417 (KR); SHIN, Huiseob, Gunpo-si Gyeonggi-do 15868 (KR)
(74) Representative: Goddar, Heinz J.
(86) International application number: PCT/KR2021/010542
(87) International publication number: WO 2022/035173

(57) **Abstract**

Disclosed are a positive electrode for a lithium secondary battery which can improve battery performance by coating the modified bottom-up graphene oxide (SBGO) obtained by silanizing the bottom-up graphene oxide (BGO) prepared by the Bottom-up approach on the positive electrode active material, and thus preventing the leaching of lithium polysulfide, a manufacturing method thereof, and a lithium secondary battery comprising the positive electrode. The positive electrode for the lithium secondary battery includes a positive electrode active material; and bottom-up graphene oxide coated on the surface of the positive electrode active material, wherein the bottom-up graphene oxide is cross-linked with each other through a hydrocarbon compound containing a cationic functional group.

## Description

### [Technical Field]

The present application claims the benefit of priority based on Korean Patent Application No. 10-2020-0100196 filed on August 11, 2020, all the contents of which are incorporated herein by reference.

The present invention relates to a positive electrode for a lithium secondary battery, a preparation method thereof, and a lithium secondary battery comprising the positive electrode, and more particularly, to a positive electrode for a lithium secondary battery capable of improving battery performance by coating the modified bottom-up graphene oxide (SBGO) obtained by silanizing the bottom-up graphene oxide (BGO) prepared by the bottom-up approach on the positive electrode active material, and thus preventing the leaching of lithium polysulfide, a manufacturing method thereof, and a lithium secondary battery comprising the positive electrode.

### [Background Art]

With the growing interest in energy storage technology, as the application of energy storage technology extends to mobile phones, tablets, laptops, and camcorders, and further to electric vehicles (EVs) and hybrid electric vehicles (HEVs), research and development of electrochemical devices are gradually increasing. Electrochemical devices are the field that is receiving the most attention in this respect, and among them, the development of secondary batteries such as a lithium-sulfur battery capable of charging and discharging has been a focus of interest. In recent years, in order to increase the energy density in developing such a battery, research and development on the design of new electrodes and batteries has been conducted.

Among these electrochemical devices, a lithium-sulfur battery (Li-S battery) using lithium metal as a negative electrode and sulfur as a positive electrode has a higher theoretical capacity and energy density (typically about 2,500 Wh/kg) than conventional lithium-ion batteries and is also economical because it uses sulfur, which can be easily obtained from nature, as a positive electrode, and thus is in the spotlight as a nextgeneration secondary battery that can replace lithium-ion batteries. In such a lithium-sulfur battery, a reduction reaction of sulfur and an oxidation reaction of lithium metal occur during discharging. At this time, sulfur forms lithium polysulfide (LiPS) having a linear structure from S₈ having a ring structure. This lithium-sulfur battery is characterized by showing a stepwise discharging voltage until the polysulfide is completely reduced to Li₂S.

However, the biggest obstacle of the lithium-sulfur battery in the commercialization is the leaching and shuttle phenomenon of the lithium polysulfide (LiPS, Li₂Sₓ) which occurs during charging and discharging in a battery using a sulfurbased compound as a positive electrode active material and an alkali metal such as lithium as a negative electrode active material. In other words, the biggest problem of the lithium-sulfur battery is a sharp decrease in capacity due to leaching of lithium polysulfide generated in the positive electrode during charging and discharging.

More specifically, lithium polysulfide, which is generated while sulfur used as a positive electrode is reduced during discharging, has high solubility in particular in etherbased liquid electrolytes, is small in size, and thus can pass through a separator, and when it meets lithium metal used as a negative electrode, it causes a side reaction to cause the problem of destabilizing the interface. As a result, the capacity is reduced due to the irreversible loss of the positive electrode active material and the lifetime of the battery is reduced due to the deposition of sulfur particles on the surface of the lithium metal due to side reactions. Therefore, there is a need for a technology that can prevent lithium polysulfide generated from the positive electrode from leaching into the liquid electrolyte during battery operation.

### [Disclosure]

### [Technical Problem]

Therefore, it is an object of the present invention to provide a positive electrode for a lithium secondary battery, which is capable of improving battery performance by coating the modified bottom-up graphene oxide (SBGO) obtained by silanizing the bottom-up graphene oxide (BGO) prepared by the bottom-up approach on the positive electrode active material, and thus preventing the leaching of lithium polysulfide, a manufacturing method thereof, and a lithium secondary battery including the positive electrode.

### [Technical Solution]

In order to achieve the above object, the present invention provides a positive electrode for a lithium secondary battery, comprising a positive electrode active material; and bottom-up graphene oxide coated on the surface of the positive electrode active material, wherein the bottom-up graphene oxide is cross-linked with each other through a hydrocarbon compound containing a cationic functional group.

In addition, the present invention provides a method of manufacturing a positive electrode for a lithium secondary battery, comprising the steps of (a) preparing a bottom-up graphene oxide (Bottom-up GO) through a bottom-up approach; (b) modifying the surface of the prepared bottom-up graphene oxide with a hydrocarbon group containing any one or more of nitrogen, oxygen, and sulfur; (c) dissolving the hydrocarbon compound substituted by two or more halogens in a solvent, and then adding the surface-modified bottom-up graphene oxide (SBGO) to prepare a mixed solution; and (d) reacting the prepared mixture to form cross-links between the surface-modified bottom-up graphene oxides (SBGO) and at the same time, coating the cross-linked surface-modified bottom-up graphene oxide (CSBGO) on the positive electrode active material.

In addition, the present invention provides a lithium secondary battery comprising a positive electrode for a lithium secondary battery; a lithium metal negative electrode; an electrolyte interposed between the positive electrode and the negative electrode; and a separator.

### [Advantageous Effects]

According to the positive electrode for the lithium secondary battery according to the present invention, the manufacturing method thereof, and the lithium secondary battery comprising the positive electrode, the present invention has the advantage that the performance of the battery can be improved by coating the modified bottom-up graphene oxide (SBGO), which is obtained by silanizing the bottom-up graphene oxide (BGO) prepared by the bottom-up approach, on the positive electrode active material and thus preventing the leaching of lithium polysulfide.

### [Description of Drawings]

FIG. 1 is a schematic diagram of 'cross-linked surface-modified bottom-up graphene oxide' according to an example of the present invention.
FIG. 2 is a reaction scheme showing a process of manufacturing bottom-up graphene oxide according to an example of the present invention.
FIG. 3 is a reaction scheme showing a process of manufacturing the surface-modified bottom-up graphene oxide according to an example of the present invention.
FIG. 4 is a reaction scheme showing a process of bonding by a cation functional group between surface-modified bottom-up graphene oxides according to an example of the present invention.
FIG. 5 is a graph showing the results of ¹H NMR analysis of the surface-modified bottom-up graphene oxide (SBGO) prepared according to an example of the present invention.
FIG. 6 is a graph showing the results of FT-IR analysis of the surface-modified bottom-up graphene oxide (SBGO) prepared according to an example of the present invention.
FIG. 7 is a TEM image of 'sulfur-carbon composite coated with cross-linked surface-modified bottom-up graphene oxide (CSBGO)' manufactured according to an example of the present invention.
FIG. 8 is an EDS image of 'sulfur-carbon composite coated with cross-linked surface-modified bottom-up graphene oxide (CSBGO)' manufactured according to an example of the present invention.
FIG. 9 is a graph of TGA analysis (left) and TEM analysis image (right) of 'sulfur-carbon composite coated with cross-linked surface-modified bottom-up graphene oxide (CSBGO)' manufactured according to an example of the present invention.
FIG. 10 is graphs comparing the discharging capacity and lifetime characteristics of the lithium-sulfur batteries according to examples of the present invention and comparative examples.

### [Best Mode]

Hereinafter, the present invention will be described in detail.

The positive electrode for the lithium secondary battery according to the present invention comprises a positive electrode active material and a bottom-up graphene oxide coated on the surface of the positive electrode active material, wherein the bottom-up graphene oxides are cross-linked with each other through a hydrocarbon compound containing a cationic functional group.

The bottom-up graphene oxide (Bottom-up GO) can be bulky or scale-up compared to conventional graphene oxide (GO), so that it is possible to form macromolecules from single-molecular carbon materials as well as it has an advantage in terms of process cost, etc., and it may be preferably synthesized by reacting citric acid and tannic acid, which are naturally-derived materials, through a bottom-up approach. However, if graphene oxide is prepared to a degree capable of achieving the object of the present invention, it is also possible to prepare it through components other than citric acid and tannic acid.

In general, graphene or graphene oxide is prepared by a bottom-up approach or a top-down approach, wherein the bottom-up approach may be representatively exemplified by a method of growing on a copper substrate or the like at a very high temperature of about 1,000 °C by chemical vapor deposition (CVD) and the top-down approach may be representatively exemplified by a method of chemically exfoliating while starting with a material such as graphite.

When manufacturing graphene oxide through the top-down approach, there are a number of problems, such as difficulty in exfoliation. However, in the case of the method of manufacturing graphene oxide through the bottom-up approach, since it is possible to easily and simply form macromolecules using an inexpensive monomolecular carbon material, it has advantages in terms of cost and scale-up, as compared to the method of manufacturing graphene oxide (GO) by pulverizing graphite or using a chemical method. Accordingly, the present applicant uses the graphene oxide used in the present invention, which is prepared through the bottom-up approach.

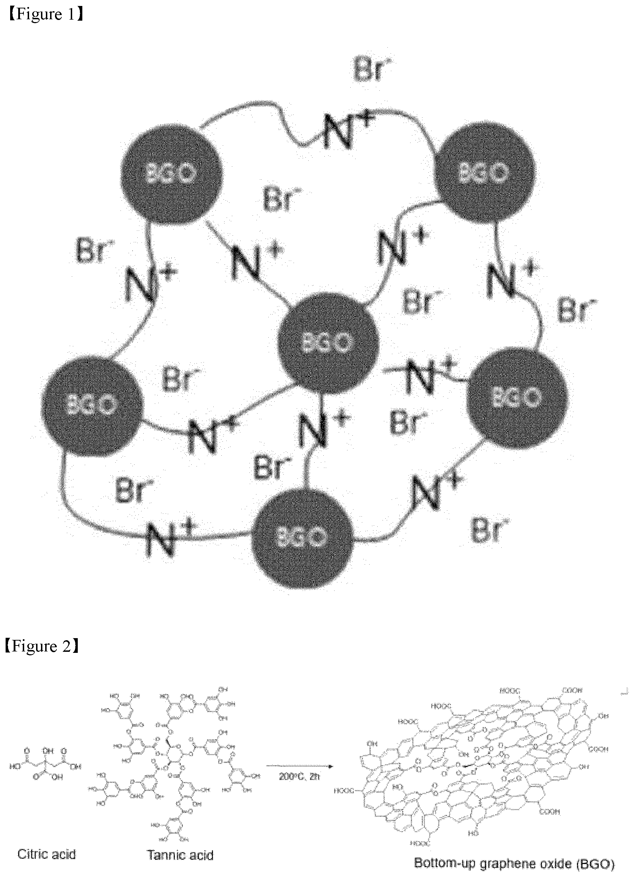

The 'cross-linked surface-modified bottom-up graphene oxide (i.e., coating material for positive electrode active material)' constituting the positive electrode for lithium secondary battery according to the present invention will be described in detail. FIG. 1 is a schematic diagram of 'cross-linked surface-modified bottom-up graphene oxide' according to an example of the present invention. As shown in FIG. 1, in the case of the coating material for the positive electrode active material comprised in the positive electrode of the present invention, the surface-modified bottom-up graphene oxide takes a form in which it is cross-linked with each other through a cationic functional group, and as such coating material is coated on the positive electrode active material, cationic functional group inhibits the leaching of lithium polysulfide. In this case, the negatively charged halogen atom may exist in a state of being charged to the positively charged nitrogen atom as shown in FIG. 1. That is, in other words, a halogen anion may be further comprised as a counter-ion for the cation included in the cationic functional group.

On the other hand, when trying to coat normal graphene oxide (GO) on a positive electrode active material such as sulfur-carbon composite, because GO holds a lot of solvent, it is difficult to coat (that is, a problem that the solid content is lowered occurs), and thus it is also not easy to manufacture the electrode, and even if manufactured, the crack phenomenon of the electrode is severe, so that it is difficult to manufacture an electrode with a desired loading. However, in the present invention, most of OH functional groups on the surface of GO were removed by treatment with cation, and LiPS adsorption capacity was improved by using cationic functional groups.

The hydrocarbon compound containing the cationic functional group may comprise one or more cationic functional groups and 2 to 20 carbon atoms, and preferably may comprise two or more cationic functional groups and 4 to 20 carbon atoms. In addition, the hydrocarbon compound containing the cationic functional group is characterized in that carbon atoms are bonded to the surface of the bottom-up graphene oxide. In addition, the hydrocarbon compound containing the cationic functional group has, for example, a -(CH₂)₁-NR₁R₂-(CH₂)ₘ-NR₃R₄-(CH₂)ₒ- structure, wherein 1, m, and o may each independently be an integer of 0 to 6, and R₁, R₂, R₃, and R₄ may each independently be hydrogen or an alkyl group having 1 to 4 carbon atoms. Meanwhile, the cationic functional group may include one or more cations selected from nitrogen cation, oxygen cation, and sulfur cation, and among them, it may be preferable to comprise nitrogen cation.

In the coating material for the positive electrode active material, one surface-modified bottom-up graphene oxide may be combined with another surface-modified bottom-up graphene oxide, and as shown in FIG. 1, may be combined with 3 to 5 surface-modified bottom-up graphene oxides, and there is no limit to the number of bonds.

On the other hand, the content of the surface-modified bottom-up graphene oxide coated on the surface of the positive electrode active material is 0.5 to 10% by weight, preferably 1 to 5% by weight, more preferably 2 to 4% by weight, most preferably about 3% by weight relative to the total weight of the positive electrode active material. If the content of the surface-modified bottom-up graphene oxide coated on the surface of the positive electrode active material is out of the above range, there is a concern that the object of the present invention may not be achieved.

As such, if the surface-modified bottom-up graphene oxide is coated on the positive electrode active material, the compatibility between the coating layer and the positive electrode active material (especially, sulfur-carbon composite) is increased, and it is possible to suppress the volume expansion of sulfur during charging and discharging of the lithium-sulfur battery, and above all, the coating material of the present invention serves to trap and adsorb lithium polysulfide so that lithium polysulfide generated at the positive electrode does not leach to the liquid electrolyte during operation of the battery, thereby improving battery performance.

The positive electrode active material preferably contains sulfur (S) atoms, and more preferably may be a sulfur-carbon composite. Considering that since sulfur has an electrical conductivity of about 5.0 x 10⁻¹⁴ S/cm and thus is close to nonconductor, electrochemical reaction at the electrode is not easy, and due to the very large overvoltage, the actual discharging capacity and voltage are far below the theoretical value, a carbon material having electrical conductivity is used together (that is, a structure in which sulfur is supported in the pores of the carbon material).

The sulfur contained in such sulfur-carbon composite may be at least one selected from the group consisting of inorganic sulfur (Ss), Li₂Sn(n≥1), an organic sulfur compound, and a carbon-sulfur polymer [(C₂Sₓ)ₙ: x=2.5 to 50, n≥2], among which it may be preferable to apply inorganic sulfur (Ss). In addition, the carbon material constituting the sulfur-carbon composite may be applied without any particular limitation as long as it has a porous structure or a high specific surface area and is commonly used in the art. For example, the carbon material having the porous structure may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon, and its shape can be used without restriction as long as it is in the form of sphere, rod, needle, plate, tube, or bulk and is commonly used in the lithium secondary battery.

The sulfur-carbon composite may have a particle size of 10 to 50 *µ*m. If the particle size of the sulfur-carbon composite is less than 10 *µ*m, there is a problem that the resistance between the particles increases and an overvoltage occurs in the electrode of the lithium-sulfur battery. If the particle size exceeds 50 *µ*m, the surface area per unit weight is reduced, and thus the wetting area with the electrolyte solution in the electrode and the reaction site with the lithium ion are decreased, and the amount of electron transfer relative to the size of the composite is reduced, so that the reaction can be delayed, and as a result, the discharging capacity of the battery can be reduced.

Next, a method for manufacturing a positive electrode for a lithium secondary battery according to the present invention will be described. The method of manufacturing the positive electrode for the lithium secondary battery comprises the steps of (a) preparing bottom-up graphene oxide (Bottom-up GO) through a bottom-up approach, (b) modifying the surface of the prepared bottom-up graphene oxide with a hydrocarbon group containing any one or more of nitrogen, oxygen and sulfur, (c) dissolving the hydrocarbon compound substituted by two or more halogens in a solvent, and then adding the surface-modified bottom-up graphene oxide (SBGO) to prepare a mixed solution, and (d) reacting the prepared mixture to form cross-links between the surface-modified bottom-up graphene oxides (SBGO) and at the same time, coating the cross-linked surface-modified bottom-up graphene oxide (CSBGO) on the positive electrode active material.

First, step (a) is a step of preparing bottom-up graphene oxide (Bottom-up GO) through a bottom-up approach. That is, the bottom-up graphene oxide may be synthesized by reacting citric acid and tannic acid, which are naturally derived materials, at a temperature of about 200 °C for about 2 hours through a bottom-up approach. On the other hand, it is one of the cores of the present invention to construct a target positive electrode coating material by bonding a functional group to BGO (bottom-up graphene oxide) similar to GO (graphene oxide) inexpensively and easily using citric acid and tannic acid. However, if graphene oxide is prepared to an extent capable of achieving the object of the present invention, bottom-up graphene oxide prepared through components other than citric acid and tannic acid may also be used. FIG. 2 is a reaction scheme showing the process of manufacturing a bottom-up graphene oxide according to an example of the present invention, which corresponds to the case of reacting citric acid and tannin as described above.

Next, step (b) described above is a step of modifying the surface of the prepared bottom-up graphene oxide with hydrocarbon groups containing nitrogen. That is, the modification of step (b) may be performed by reacting -COOH or -OH on the surface of the bottom-up graphene oxide with carbon of a hydrocarbon compound containing any one or more of nitrogen, oxygen, and sulfur under an organic solvent (ordinary organic solvents, such as ethanol, can be illustrated) and an acid catalyst (typical acid catalysts, such as hydrochloric acid, can be illustrated). Here, the reaction temperature may be 50 to 90 °C, preferably 60 to 80 °C, and the reaction time may be 10 to 40 hours, preferably 15 to 30 hours.

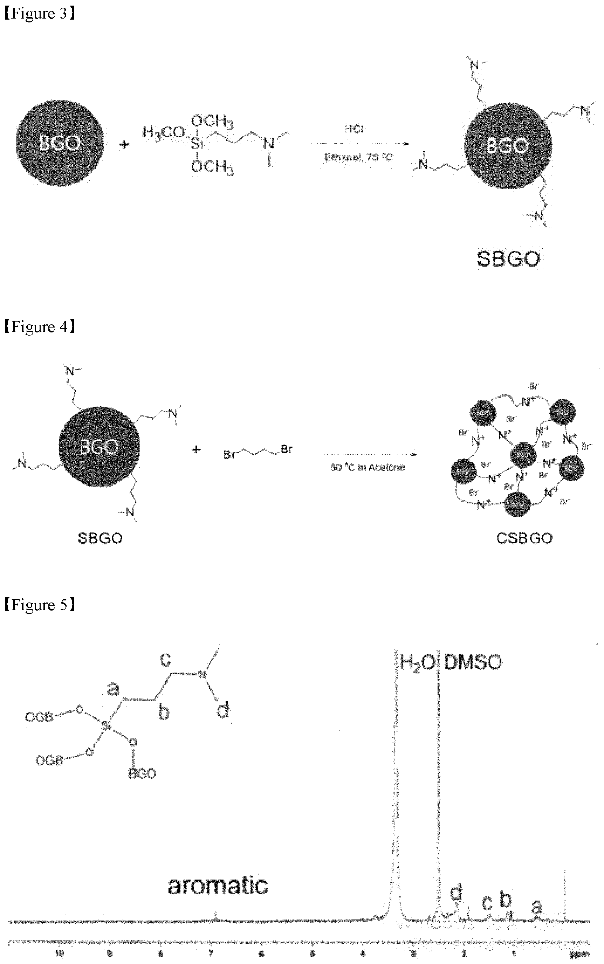

That is, through the reaction, a part of a hydrocarbon compound containing at least one of nitrogen, oxygen and sulfur, preferably one or more, preferably 3 to 5 hydrocarbon groups containing nitrogen atom are formed on the surface of the bottom-up graphene oxide to serve as a functional group (i.e., bonded to the functional group of other modified bottom-up graphene oxide). FIG. 3 is a reaction scheme showing a process of manufacturing the surface-modified bottom-up graphene oxide according to an embodiment of the present invention. Through FIG. 3, by reacting the bottom-up graphene oxide with a hydrocarbon compound containing any one or more of nitrogen, oxygen and sulfur, it can be confirmed how the surface of the bottom-up graphene oxide is modified.

The hydrocarbon compound is preferably a hydrocarbon compound containing an amino group. In this case, the hydrocarbon compound containing the amino group may be exemplified by (N,N-Dimethylaminopropyl)trimethoxysilane, 2-(Dimethylamino) ethylmethacrylate and mixtures thereof. In addition, the addition amount of the hydrocarbon compound containing at least one of nitrogen, oxygen, and sulfur may be 200 to 500 parts by weight, preferably 275 to 350 parts by weight, and more preferably about 300 parts by weight relative to 100 parts by weight of the bottom-up graphene oxide. If the addition amount of the hydrocarbon compound containing at least one of nitrogen, oxygen, and sulfur is less than 200 parts by weight relative to 100 parts by weight of the bottom-up graphene oxide, there is a concern that the reaction may not be made sufficiently. If the addition amount exceeds 500 parts by weight, the amount of unreacted materials may increase, which may cause a washing problem.

Subsequently, step (c) is a step of dissolving the hydrocarbon compound substituted by two or more halogens in a solvent, and then adding the surface-modified bottom-up graphene oxide (SBGO) to prepare a mixed solution. The halogen-substituted hydrocarbon compound may preferably be a halogen-substituted alkyl compound, and may be exemplified by 1,4-dibromobutane, 1,4-dichlorobutane, Diiodobutane, Dichlorobutane, and mixtures thereof.

The addition amount of the halogen-substituted hydrocarbon compound may be 95 to 110 parts by weight, preferably 100 to 105 parts by weight relative to 100 parts by weight of the surface-modified bottom-up graphene oxide. If the addition amount of the halogen-substituted hydrocarbon compound is less than 95 parts by weight relative to 100 parts by weight of the surface-modified bottom-up graphene oxide, there is a concern that the reaction may not be made sufficiently. If the addition amount exceeds 110 parts by weight, there may be a problem in that crosslinking is not performed. In addition, it may be preferable that the solvent used in step (c) is a conventional organic solvent

Finally, step (d) is a step of reacting the mixture prepared in step (c) to form cross-links between the surface-modified bottom-up graphene oxides (SBGO) (containing cationic functional groups) and at the same time, coating the cross-linked surface-modified bottom-up graphene oxide (CSBGO) on the positive electrode active material to manufacture a positive electrode according to the present invention.

FIG. 4 is a reaction scheme showing a process of bonding by a cation functional group between the surface-modified bottom-up graphene oxides according to an example of the present invention. Through FIG. 4, by reacting the surface-modified bottom-up graphene oxide with a halogen-substituted hydrocarbon compound, it can be confirmed how the surface-modified bottom-up graphene oxides bond to each other.

The reaction of the surface-modified bottom-up graphene oxide (SBGO) and the halogen-substituted hydrocarbon compound is an in-situ crosslinking reaction (reacting in one container) that allows the formation of a uniform coating layer, and the nitrogen atom formed on the surface of each (surface-modified) bottom-up graphene oxide (SBGO) and the halogen atom of the halogen-substituted hydrocarbon compound are reacted, making the nitrogen atom positively charged and the halogen atom negatively charged, and through the positive nitrogen charge, not only bonding between the surface-modified bottom-up graphene oxides (SBGO) is made, but also the cationic functional group inhibits the leaching of lithium polysulfide by coating the positive electrode active material with this coating material. In this case, the negatively charged halogen atom may exist in a state of being charged to the positively charged nitrogen atom, as shown in FIG. 4.

The positive electrode active material preferably contains sulfur (S) atoms, and more preferably may be a sulfur-carbon composite. Considering that since sulfur has an electrical conductivity of about 5.0 x 10⁻¹⁴ S/cm and thus is close to nonconductor, electrochemical reaction at the electrode is not easy, and due to the very large overvoltage, the actual discharging capacity and voltage are far below the theoretical value, a carbon material having electrical conductivity is used together (that is, a structure in which sulfur is supported in the pores of the carbon material).

The sulfur contained in such sulfur-carbon composite may be at least one selected from the group consisting of inorganic sulfur (Ss), Li₂Sn(n≥1), an organic sulfur compound, and a carbon-sulfur polymer [(C₂Sₓ)ₙ: x=2.5 to 50, n≥2]. Preferably, inorganic sulfur (S₈) can be used. In addition, the carbon material constituting the sulfur-carbon composite may be applied without any particular limitation as long as it has a porous structure or a high specific surface area and is commonly used in the art. For example, the carbon material having the porous structure may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon, and its shape can be used without restriction as long as it is in the form of sphere, rod, needle, plate, tube, or bulk and is commonly used in the lithium secondary battery.

The sulfur-carbon composite may have a particle size of 10 to 50 *µ*m. If the particle size of the sulfur-carbon composite is less than 10 *µ*m, there is a problem that the resistance between the particles increases and an overvoltage occurs in the electrode of the lithium-sulfur battery. If the particle size exceeds 50 *µ*m, the surface area per unit weight is reduced, and thus the wetting area with the electrolyte solution in the electrode and the reaction site with the lithium ion are decreased, and the amount of electron transfer relative to the size of the composite is reduced, so that the reaction can be delayed, and as a result, the discharging capacity of the battery can be reduced.

Through the preparation method as described above, one surface-modified bottom-up graphene oxide (SBGO) and another surface-modified bottom-up graphene oxide take a cross-linked form by cationic functional groups (including nitrogen cations) on the surface of the positive electrode active material. In other words, all bottom-up graphene oxides take the surface-modified form on the surface of the positive electrode active material. That is, at least one cationic functional group is formed on the surface of all bottom-up graphene oxide, and therefore, entire bottom-up graphene oxides positioned on the positive electrode active material of the present invention has a structure bonded by cationic functional groups.

As such, when a bottom-up graphene oxide whose surface is modified by introducing a cross-linked structure is coated on the positive electrode active material, the compatibility between the coating layer and the positive electrode active material (especially sulfur-carbon composite) is improved, and the volume expansion of sulfur during charging and discharging of lithium-sulfur batteries can be suppressed. Above all, the coating material of the present invention serves to trap and adsorb lithium polysulfide so that lithium polysulfide generated from the positive electrode does not leach into the liquid electrolyte during battery operation, thereby improving the performance of the battery.

On the other hand, the positive electrode manufactured through the method of manufacturing the positive electrode may further comprise a binder and an electrically conductive material. The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylenepropylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode material comprising the positive electrode active material. If the content of the binder is less than 1 part by weight, the adhesive strength between the positive electrode active material and the current collector may be insufficient. If the content of the binder exceeds 50 parts by weight, the adhesive strength is improved but the content of the positive electrode active material may be reduced accordingly, thereby lowering the capacity of the battery.

In addition, the electrically conductive material is not particularly limited as long as it does not cause side reactions in the internal environment of the lithium secondary battery and has excellent electrical conductivity while not causing chemical changes in the battery. Typically, the electrically conductive material may be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, and preferably 1 to 30 parts by weight, based on 100 parts by weight of total weight of the positive electrode material comprising the positive electrode active material. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode material is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

A filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode current collector may be, but is not limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

In addition, the present invention provides a lithium secondary battery comprising a positive electrode for the lithium secondary battery, a lithium metal negative electrode, an electrolyte interposed between the positive electrode and the negative electrode, and a separator, and the lithium secondary battery is preferably a lithium-sulfur battery.

In general, the lithium secondary battery is composed of a positive electrode composed of a positive electrode material and a current collector, a negative electrode composed of a negative electrode material and a current collector, and a separator that blocks electrical contact between the positive electrode and the negative electrode and allows lithium ions to move, and comprises an electrolyte solution for conducting lithium ions by being impregnated therein. The negative electrode may be manufactured according to a conventional method known in the art. For example, the negative electrode active material, the electrically conductive material, the binder, and if required, the filler and the like are dispersed and mixed in a dispersion medium (solvent) to form a slurry, and the slurry can be applied onto the negative electrode current collector, followed by drying and rolling it to prepare a negative electrode.

The negative electrode active material may be a lithium metal or a lithium alloy (for example, an alloy of lithium and a metal such as aluminum, zinc, bismuth, cadmium, antimony, silicon, lead, tin, gallium or indium). The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti), or silver (Ag). The shape of the negative electrode current collector may be in the form of a foil, film, sheet, punched form, porous body, foam or the like.

The separator is interposed between the positive electrode and the negative electrode, and prevents a short circuit therebetween and serves as a pathway for lithium ions. Olefin-based polymers such as polyethylene and polypropylene, glass fibers or the like may be used in the form of sheets, multilayers, microporous films, woven fabrics, nonwoven fabrics or the like as the separator, but the present invention is not limited thereto. Meanwhile, if a solid electrolyte (e.g., an organic solid electrolyte, an inorganic solid electrolyte, etc.) such as a polymer is used as the electrolyte, the solid electrolyte may also serve as a separator. Specifically, an insulating thin film with high ion permeability and mechanical strength is used. The pore diameter of the separator is generally in the range of 0.01 to 10 *µ*m, and the thickness may generally be in the range of 5 to 300 *µ*m.

As the electrolyte solution which is a non-aqueous electrolyte solution (non-aqueous organic solvent), carbonate, ester, ether, or ketone may be used alone or in combination of two or more thereof, but is not limited thereto. For example, an aprotic organic solvent, such as dimethyl carbonate, diethyl carbonate, dipropyl carbonate, methyl propyl carbonate, ethyl propyl carbonate, methyl ethyl carbonate, ethylene carbonate, propylene carbonate, butylene carbonate, γ-butyrolactone, n-methyl acetate, n-ethyl acetate, n-propyl acetate, phosphoric acid triester, dibutyl ether, N-methyl-2-pyrrolidinone, 1,2-dimethoxyethane, tetrahydroxy Franc, tetrahydrofuran derivatives such as 2-methyltetrahydrofuran, dimethyl sulfoxide, formamide, dimethylformamide, dioxolane and derivatives thereof, acetonitrile, nitromethane, methyl formate, methyl acetate, trimethoxymethane, sulfolane, methyl sulfolane, 1,3-dimethyl-2-imidazolidinone, methyl propionate, ethyl propionate and the like can be used, but is not limited thereto.

Lithium salts may be added to the electrolyte solution (so-called non-aqueous electrolyte solution containing lithium salt). The lithium salts may comprise, but not limited to, those known to be favorably soluble in non-aqueous electrolyte solutions, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium lower aliphatic carboxylate, lithium tetraphenyl borate, or imide, etc. The (non-aqueous) electrolyte solution may further comprise pyridine, triethylphosphite, triethanolamine, cyclic ether, ethylene diamine, n-glyme, hexamethylphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride or the like, for the purpose of improving charging-discharging characteristics, flame retardancy, and the like. If necessary, halogen-containing solvents such as carbon tetrachloride and ethylene trifluoride may be further added to impart nonflammability, and carbon dioxide gas may be further added to improve the high-temperature conservation characteristics.

The lithium secondary battery of the present invention can be manufactured by a conventional method in the art. For example, the lithium secondary battery can be manufactured by inserting the porous separator between the positive electrode and the negative electrode, and introducing the non-aqueous electrolyte solution. The lithium secondary battery according to the present invention is not only applicable to a battery cell used as a power source of a small device but also particularly suitably usable as a unit cell of a battery module which is a power source of a medium and large-sized device. In this respect, the present invention also provides a battery module in which at least two lithium secondary batteries are electrically connected (in series or in parallel). It is needless to say that the number of lithium secondary batteries comprised in the battery module may be variously adjusted in consideration of the use and capacity of the battery module.

In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present invention is not limited thereto.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

### [Example 1] Preparation of positive electrode for lithium secondary battery

First, a bottom-up graphene oxide (BGO) was prepared by reacting citric acid and tannic acid, which are naturally-derived materials, at 200 °C for 2 hours through a bottom-up approach. Then, (N,N-dimethylaminopropyl)trimethoxysilane (Sigma-aldrich company) with the prepared bottom-up graphene oxide was reacted for 24 hours at a temperature of 70 °C under an ethanol solvent and a hydrochloric acid catalyst to modify the surface of the bottom-up graphene oxide with a nitrogen-containing hydrocarbon group. At this time, the (N,N-dimethylaminopropyl) trimethoxysilane was added in an amount exceeding 300 parts by weight and less than 500 parts by weight, based on 100 parts by weight of bottom-up graphene oxide (unreacted nitrogen-containing hydrocarbon groups are removed through solvent).

Subsequently, 4 mg (that is, set so that CSBGO is 3% by weight relative to the total weight of the following sulfur-carbon composite) of the surface-modified bottom-up graphene oxide (SBGO) and 4 mg of dibromobutane were mixed and dissolved in acetone solvent to prepare a mixed solution. Then, the sulfur-carbon composite (prepared by mixing 1.4 g of elemental sulfur and 0.6 g of super P (carbon), grinding with mortar and heat-treating at 155 °C for 30 minutes) was further mixed, stirred at 50 °C for 15 hours, and an in-situ cross-linking reaction was performed to form a cross-linkage containing a cationic functional group between the surface-modified bottom-up graphene oxide (SBGO) and at the same time, mutually cross-linked surface-modified bottom-up graphene oxide (CSBGO) was coated on the sulfur-carbon composite. Then, the stirred solution was dried at 50 °C to remove the acetone solvent and unreacted dibromobutane.

Finally, the sulfur-carbon composite coated with the mutually cross-linked surface-modified bottom-up graphene oxide (CSBGO), binder (polyacrylic acid), and electrically conductive material (carbon black) were mixed in a weight ratio of 85:10:5, and then, 0.5% by weight of a PVA dispersant was additionally added thereto, and the concentration was adjusted so that the solid content in the aqueous phase was 18 % by weight, and mixed with a thinky mixer to prepare a positive electrode slurry. Then, the prepared positive electrode slurry was coated on aluminum foil with a 400 *µ*m doctor blade and dried at 50 °C for about 14 hours to prepare a positive electrode for a lithium secondary battery.

### [Comparative Example 1] Preparation of positive electrode for lithium secondary battery

A sulfur-carbon composite prepared by mixing elemental sulfur (sulfur) and super P (carbon) in a weight ratio of 7:3, pulverizing with a mortar, and heat-treating at 155 °C for 30 minutes, a binder (polyacrylic acid), and an electrically conductive material (carbon black) are mixed in a weight ratio of 85:10:5 and then, additionally 0.5 % by weight of PVA dispersant was added thereto, and the concentration was adjusted so that the solid content in the aqueous phase was 18% by weight, and the resultant was mixed with a thinky mixer to prepare a positive electrode slurry. Then, the prepared positive electrode slurry was coated on aluminum foil with a 400 *µ*m doctor blade and then dried at 50 °C for about 14 hours to prepare a positive electrode for a lithium secondary battery.

### [Comparative Example 2] Preparation of positive electrode for lithium secondary battery

A positive electrode for a lithium secondary battery was prepared in the same manner as in Example 1 above, except that the content of surface-modified bottom-up graphene oxide (SBGO) and dibromobutane was changed from 4 mg to 2 mg, respectively (that is, set so that CSBGO relative to the total weight of the sulfur-carbon composite is 1% by weight).

### [Comparative Example 3] Preparation of positive electrode for lithium secondary battery

A positive electrode for a lithium secondary battery was prepared in the same manner as in Example 1 above, except that the content of surface-modified bottom-up graphene oxide (SBGO) and dibromobutane was changed from 4 mg to 6 mg, respectively (that is, set so that CSBGO relative to the total weight of the sulfur-carbon composite is 5% by weight).

### [Experimental Example 1] Analysis of the chemical structure of surface-modified bottom-up graphene oxide (SBGO)

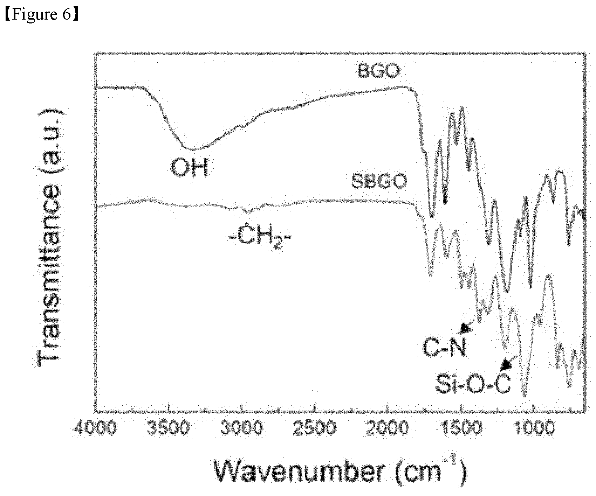

¹H NMR analysis and FT-IR analysis were performed to confirm whether the 'surface-modified bottom-up graphene oxide (SBGO)' prepared in Example 1 was normally synthesized from the bottom-up graphene oxide (BGO). FIG. 5 is a graph showing the results of ¹H NMR analysis of the surface-modified bottom-up graphene oxide (SBGO) prepared according to an example of the present invention, and FIG. 6 is a graph showing the results of FT-IR analysis of the surface-modified bottom-up graphene oxide (SBGO) prepared according to an example of the present invention.

As described above, as a result of performing ¹H NMR and FT-IR analyses to confirm whether the surface-modified bottom-up graphene oxide (SBGO) prepared in Example 1 was normally synthesized from the bottom-up graphene oxide (BGO), as shown in Figures 5 and 6, all functional groups formed on the surface of the bottom-up graphene oxide (BGO) appeared, and through this, it was confirmed that the surface of the bottom-up graphene oxide (BGO) was modified without any abnormality.

### [Experimental Example 2] Analysis of the composition of sulfur-carbon composite coated with cross-linked surface-modified bottom-up graphene oxide (CSBGO)

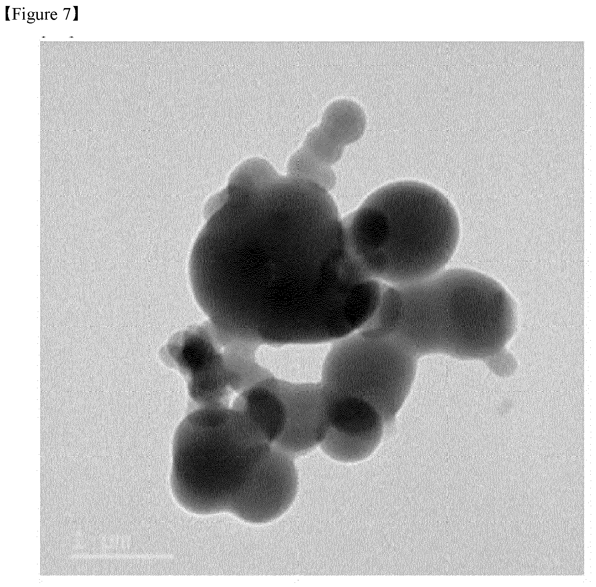

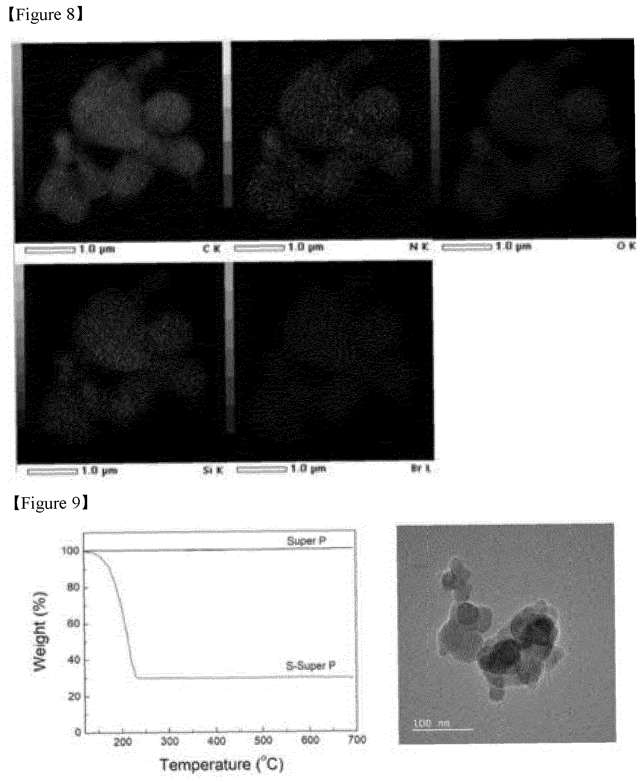

TEM analysis and EDS analysis were performed to confirm whether the 'crosslinked surface-modified bottom-up graphene oxide (CSBGO)' prepared in Example 1 was normally coated on the surface of the sulfur-carbon composite. FIG. 7 is a TEM image of 'sulfur-carbon composite coated with cross-linked surface-modified bottom-up graphene oxide (CSBGO)' manufactured according to an example of the present invention, and FIG. 8 is an EDS image of 'sulfur-carbon composite coated with cross-linked surface-modified bottom-up graphene oxide (CSBGO)' manufactured according to an example of the present invention.

As described above, as a result of performing TEM analysis and EDS analysis to confirm whether the 'cross-linked surface-modified bottom-up graphene oxide (CSBGO)' prepared in Example 1 was normally coated on the surface of the sulfur-carbon composite, elements C, N, O, Si, and Br were all detected, as shown in Figures 7 and 8, and through this, it was confirmed that the in-situ crosslinking reaction was completed without any abnormalities, and thus the 'crosslinked surface-modified bottom-up graphene oxide (CSBGO)' was normally coated on the surface of the sulfur-carbon composite.

Meanwhile, FIG. 9 is a graph of TGA analysis (left drawing) and TEM analysis image (right drawing) of 'sulfur-carbon composite coated with cross-linked surface-modified bottom-up graphene oxide (CSBGO)' prepared according to an example of the present invention. In particular, as can be seen from the left drawing of FIG. 9, it was confirmed that the sulfur content in the sulfur-carbon composite is 70% by weight, and through this, it was confirmed that the sulfur content was well maintained even when prepared as in the present invention.

That is, in other words, FIG. 9 is for confirming whether the coated polymer disappears or decomposes during the supporting of sulfur (due to the fact that when it disappears or is changed, the content of sulfur also changes). As there is no change in the sulfur content, it can be seen that the coated polymer does not disappear or decompose during sulfur loading.

### [Example 2, Comparative Examples 4 to 6] Preparation of lithium-sulfur battery

The positive electrodes prepared in Example 2 and Comparative Examples 1 to 3 above were positioned to face the lithium metal negative electrodes, and then, Celgard separators were interposed between the positive electrodes and the negative electrodes. Then, an electrolyte solution prepared by dissolving LiTFSI and LiNO₃ at concentrations of 1M and 0.2M in DOL/DME solvent, respectively, was injected into the case to prepare a coin cell type lithium-sulfur battery.

### [Experimental Example 3] Evaluation of discharging capacity and lifetime characteristics of lithium secondary battery

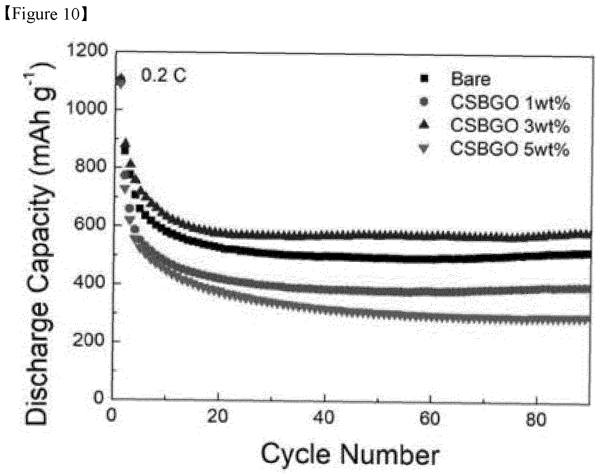

For lithium-sulfur batteries manufactured in Example 2 and Comparative Examples 4 to 6 above, discharging capacity and lifetime characteristics were evaluated by setting the current density to 0.2 C-rate. FIGs. 10 is a graph comparing the discharging capacity and lifetime characteristics of the lithium-sulfur batteries according to an example of the present invention and comparative examples.

As described above, as a result of evaluating the discharging capacity and lifetime characteristics of lithium-sulfur batteries, as shown in FIG. 10, it was confirmed that the lithium-sulfur battery of Example 2 (corresponding to 'CSBGO 3 wt%' in FIG. 10) in which cross-linked surface-modified bottom-up graphene oxide (CSBGO, coating material) was used at 3 % by weight relative to the total weight of the sulfur-carbon composite shows improved cell performance, as compared to the lithium-sulfur battery of Comparative Example 4 (corresponding to 'Bare' in FIG. 10) in which only normal sulfur-carbon composite is applied as a positive electrode active material.

However, it was confirmed that even if the cross-linked surface-modified bottom-up graphene oxide (CSBGO, coating material) is coated on the sulfur-carbon composite in the same way, when the content of the coating material is 1% by weight (corresponding to 'CSBGO 1wt%' in FIG. 10) and 5% by weight (corresponding to 'CSBGO 5wt%' in FIG. 10) relative to the total weight of the sulfur-carbon composite, rather, the cell performance was lowered even compared to the lithium-sulfur battery of Comparative Example 4 (corresponding to 'Bare' in FIG. 10), in which only normal sulfur-carbon composite was applied as a positive electrode active material. Therefore, it can be seen that even if the coating material for the positive electrode active material of the present invention is used, the cell performance is improved only when used within a specific content range.

## Claims

1. A positive electrode for a lithium secondary battery comprising,
a positive electrode active material; and
a bottom-up graphene oxide coated on the surface of the positive electrode active material,
wherein the bottom-up graphene oxides are crosslinked with each other through a hydrocarbon compound containing a cationic functional group.

2. The positive electrode for the lithium secondary battery according to claim 1, wherein the hydrocarbon compound containing the cationic functional group comprises at least one cationic functional group and 2 to 20 carbon atoms.

3. The positive electrode for the lithium secondary battery according to claim 1, wherein the cationic functional group comprises at least one cation selected from nitrogen cation, oxygen cation and sulfur cation, and traps and adsorbs lithium polysulfide.

4. The positive electrode for the lithium secondary battery according to claim 2, wherein the hydrocarbon compound containing the cationic functional group comprises at least 2 cationic functional groups and 4 to 20 carbon atoms.

5. The positive electrode for the lithium secondary battery according to claim 4, wherein the hydrocarbon compound containing the cationic functional group is bonded to the surface of the bottom-up graphene oxide by its carbon atom.

6. The positive electrode for the lithium secondary battery according to claim 5, wherein the hydrocarbon compound containing the cationic functional group has a - (CH₂)₁-NR₁R₂-(CH₂)ₘ-NR₃R₄-(CH₂)ₒ- structure, wherein 1, m, and o are each independently an integer of 0 to 6, and R₁, R₂, R₃, and R₄ are each independently hydrogen or an alkyl group having 1 to 4 carbon atoms.

7. The positive electrode for the lithium secondary battery according to claim 1, wherein the halogen anion is further comprised as a counter-ion to the cation contained in the cationic functional group.

8. The positive electrode for the lithium secondary battery according to claim 1, wherein the content of the surface-modified bottom-up graphene oxide coated on the surface of the positive electrode active material is 0.5 to 10% by weight relative to the total weight of the positive electrode active material.

9. The positive electrode for the lithium secondary battery according to claim 1, wherein the positive electrode active material is sulfur-carbon composite.

10. A method for manufacturing a positive electrode for a lithium secondary battery comprising the steps of,
(a) preparing bottom-up graphene oxide (Bottom-up GO) through bottom-up approach;
(b) modifying the surface of the prepared bottom-up graphene oxide with a hydrocarbon group containing any one or more of nitrogen, oxygen, and sulfur;
(c) dissolving the hydrocarbon compound substituted by two or more halogens in a solvent, and then adding the surface-modified bottom-up graphene oxide (SBGO) to prepare a mixed solution; and
(d) reacting the prepared mixture to form cross-links between the surface-modified bottom-up graphene oxides (SBGO) and at the same time, coating the crosslinked surface-modified bottom-up graphene oxide (CSBGO) on the positive electrode active material.

11. A method for manufacturing a positive electrode for a lithium secondary battery according to claim 10, wherein the bottom-up graphene oxide of step (a) is prepared by reacting citric acid and tannic acid.

12. The method for manufacturing the positive electrode for the lithium secondary battery according to claim 10, wherein the modification of step (b) is performed by reacting -COOH or -OH on the surface of the bottom-up graphene oxide with carbon of a hydrocarbon compound containing at least one of nitrogen, oxygen, and sulfur under an organic solvent and an acid catalyst.

13. The method for manufacturing the positive electrode for the lithium secondary battery according to claim 12, wherein the hydrocarbon compound contains an amino group, and the hydrocarbon compound containing an amino group is selected from the group consisting of (N,N-dimethylaminopropyl)trimethoxysilane, 2-(dimethylamino)ethyl methacrylate, and mixtures thereof.

14. The method for manufacturing the positive electrode for the lithium secondary battery according to claim 10, wherein the halogen-substituted hydrocarbon compound of step (c) is selected from the group consisting of 1,4-dibromobutane, 1,4-dichlorobutane, diiodobutane, dichlorobutane, and mixtures thereof.

15. A lithium secondary battery comprising the positive electrode for the lithium secondary battery of claim 1; a lithium metal negative electrode; an electrolyte interposed between the positive electrode and the negative electrode; and a separator.

16. The lithium secondary battery according to claim 15, wherein the lithium secondary battery is a lithium-sulfur battery.
